# EUROPEAN PATENT APPLICATION

(11) **EP 4 086 301 A1**
(43) Date of publication of application: **09.11.2022**
(21) Application number: 21172728.4
(22) Date of filing: 07.05.2021
(51) Int. Cl.: C08K 3/38, C08L 83/04, C08G 77/56, C08L 83/14

(54) **SELF-HEALING ELASTOMERS AND METHOD OF MAKING THE SAME**

(71) Applicant: Oulun Yliopisto, 90014 Oulun Yliopisto (FI)
(72) Inventor: TOLVANEN, Jarkko, 90014 Oulun yliopisto (FI); NELO, Mikko, 90014 Oulun yliopisto (FI); HANNU, Jari, 90014 Oulun yliopisto (FI); JUUTI, Jari, 90014 Oulun yliopisto (FI); JANTUNEN, Heli, 90014 Oulun yliopisto (FI)
(74) Representative: Berggren Oy

(57) **Abstract**

The invention relates to a method for manufacturing a self-healing elastomer (100), comprising preparing, with respect to the total weight of the self-healing elastomer (100), 0.1 - 5 wt.% of boron trioxide (B₂O₃), 65 - 90 wt.% of hydroxyl-terminated polydimethylsiloxane (PDMS-OH), 5-30 wt.%, when measured in combined, of polysiloxane precursors (201), being a first composition (201a) comprising a siloxane base, and a second composition (201b) comprising a siloxane crosslinker, wherein the ratio by weight of the first composition (201a) and the second composition (201b) is 1:1 to 50:1; reacting B₂O₃ and PDMS-OH at an elevated temperature ranging from 60 °C to 200 °C, endpoints inclusive, thereby obtaining a first mixture (101), mixing the first mixture (101) with an alcohol, and then the first composition (201a), thereby obtaining a second mixture (102), reacting the second mixture (102) and the second composition (201b), thereby obtaining the self-healing elastomer (100).

## Description

### Technical field

The present application relates to self-healing elastomers and methods of making the same.

### Background

Self-healing materials are synthetically-created substances that can have the ability to automatically repair damages, such as cracks or cuts, to themselves.

The self-healing materials in principle may be divided into two systems, intrinsic system and extrinsic system. Self-healing materials belonging to the intrinsic system have the build-in, inherent self-healing ability. Self-healing materials belonging to the intrinsic system may or may not require an external stimulus (light, temperature change, etc.) to initiate the healing process.

The materials belonging to the extrinsic system, on the other hand, acquire the self-healing ability through self-healing ingredients, which are often in the form of capsules or as microvascular networks (i.e. microchannels) within a polymer material. When the material is damaged, said self-healing ingredients, released from the ruptured capsules, cause the polymer to repair by reacting chemically with the surrounding material.

However, these materials of extrinsic system utilizing capsules or microvascular networks are often not suitable for applications relating to soft electronics. For example, capsules and microvascular networks often impair electrical and mechanical properties, and structures containing a self-healing ingredient can leak prematurely under stress, in which case the self-healing ability is completely lost. Also, self-healing ingredients need to be refilled to the networks after damage to restore the self-healing ability. Running out of the self-healing capability in the cases where self-healing is repeatedly required makes them unfeasible for certain applications. This is especially true for devices or systems including such devices that are inherently soft and continuously exposed to changing environments. These can include, but are not limited to, soft robotics and smart skins. In some cases, self-healing can be difficult to achieve in soft electronics, for example in a skin-mounted device, if an external stimulus such as high temperature, e.g. above 50°C, is required, or if the required healing time is long. Another drawback that extrinsic systems utilizing capsules or microvascular networks is that they lack re-processability and/or recyclability.

Therefore, there is a desire to have improved self-healing materials in the intrinsic system, especially for the applications relating to soft electronics.

### Summary

It is an object of the present invention to provide a new self-healing material that has the intrinsically self-healing ability, improved mechanical properties and transparency. Specifically, the present invention relates to intrinsically self-healing elastomers which can be used in particular in, but not limited to, soft and printed electronics as substrates and as a base material for a wide variety of soft and /or flexible and/or stretchable electronic components, e.g. actuators, energy harvesters, sensors, capacitors, conductors, resistors, insulators, encryption devices, etc. The intrinsically self-healing material according to the present invention can also be used in mechanical applications as sealants, moisture insulation, rubber spring/dampers, coatings, etc. It is possible to obtain completely intrinsically self-healing components and devices based on the material. At the moment, none of the self-healing materials in the prior art are as versatile as the self-healing elastomer according to the present invention with respect to the above-mentioned applications.

According to one aspect of the invention, there is provided a method for manufacturing a self-healing elastomer, comprising
- preparing, with respect to the total weight of the self-healing elastomer,
   - 0.1 - 5 wt.% of boron trioxide (B₂O₃), preferably in the form of nanoparticles,
   - 65 - 90 wt.% of hydroxyl-terminated polydimethylsiloxane (PDMS-OH)
   - 5 - 30 wt.%, when measured in combined, of polysiloxane precursors, being
      o a first composition comprising a siloxane base, preferably a polymer containing at least one ethylenically unsaturated group , and preferably also a branched siloxane-based polymer, and optionally a surface modifier which preferably contains at least one ethylenically unsaturated group;
      o a second composition comprising a siloxane crosslinker,
         wherein the ratio by weight of the first composition and the second composition is 1:1 to 50:1;
- reacting B₂O₃ and PDMS-OH at an elevated temperature ranging from 60 °C to 200 °C, endpoints inclusive, thereby obtaining a first mixture,
- mixing the first mixture with an alcohol, and then the first composition, thereby obtaining a second mixture,
- reacting the second mixture and the second composition, preferably at an elevated temperature ranging from 60 °C to 150 °C, endpoints inclusive, thereby obtaining the self-healing elastomer.

The method according to the present invention results in a novel intrinsically and autonomously self-healing elastomer, herein referred as interpenetrating PBS-PDMS.

Thus, according to another aspect of the invention, there is provided a self-healing elastomer, which is obtainable by the method according the present invention. The self-healing elastomer, interpenetrating PBS-PDMS, comprises an interpenetrating polymer network, comprising a polyborosiloxane-based polymer, and a polydimethylsiloxane-based polymer.

The self-healing elastomer according to the present invention has an unique structure formed by the interpenetrating networks and cross-links and an unique composition, that contribute unprecedented mechanical properties. The self-healing elastomer is capable being stretched more than 20 times of its length and return the original size and form with the original or even better mechanical properties. Further, the self-healing elastomer possesses all in one excellent elasticity, autonomous self-healing efficiency, moisture barrier ability, and transparency, which properties are difficult to achieve simultaneously in the known single material in the prior art. With the self-healing elastomer according to the present invention, it is possible to make devices that meet the waterproof requirements according to the standard IP67 (IP Code, or Ingress Protection Code, sometimes referred to as International Protection Code). Furthermore, the self-healing ability of the self-healing elastomer according to the present invention remains even in challenging conditions, e.g. in freezing conditions (-19°C), underwater, saline water, and supercooled saline water (-19 °C). The self-healing elastomer manufactured by the method according to the present invention has a good adhesion ability and thus especially suitable for applications relating to adhesive. Further, it heals fast in a room temperature, especially on a surface. Furthermore, the self-healing elastomer, interpenetrating PBS-PDMS, belongs to the intrinsic system, thus has better reprocessability and/or recyclability than materials of extrinsic system.

The precursor of the self-healing elastomer according to the present invention, based on a polyborosiloxane-based polymer, denoted as PBS, obtainable by reacting B₂O₃ nanoparticles with hydroxyl-terminated polydimethylsiloxane (PDMS-OH), is by itself a novel polymer with a wide range of potential applications. For example, because it can be produced and stored/transported as a stable product, it can be provided to different end users who can then prepare either the self-healing elastomer product or a different material, for example by mixing the PBS with other fillers as an end product. It is also possible to transfer the viscous PBS to viscoelastic with other fillers alone (carbon nanotubes, graphene, etc.). For instance, in soft sensors it might be even better option as it is possible to further tune the elastic moduli and stiffness of the material, while increasing its stimuli responsiveness at the same time. For example it could only be applied to a certain part of the sensor structure (such as tip of micropyramids and/or substrate) leading to a greater change in the properties, such as electrical, optical or scattering property, under deformation. Thus, the present invention provides the precursor of the self-healing elastomer.

The improved mechanical properties of interpenetrating PBS-PDMS, the self-healing elastomer according to the present invention allow a wide variety of industrial usability, such as in the soft and printed electronics, robots, actuators, and/or as base material for sensor components or sensor component.

The main embodiments are characterized in the independent claims. Various embodiments are disclosed in the dependent claims. The embodiments and examples recited in the claims and the specification are mutually freely combinable unless otherwise explicitly stated.

### Brief description of the drawings

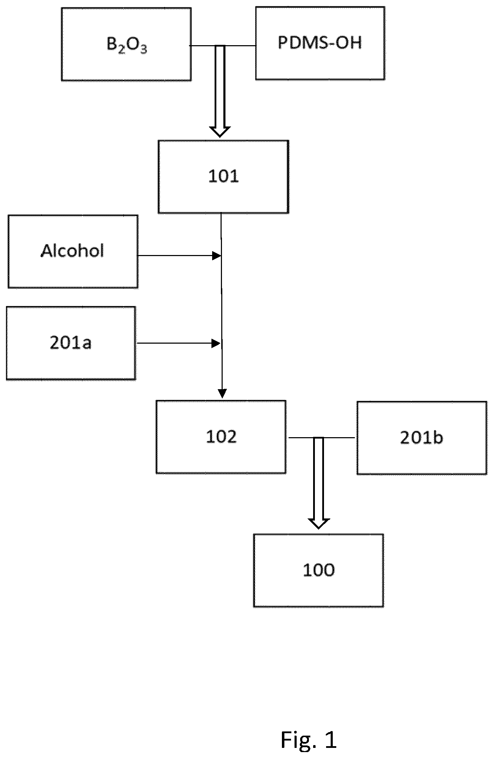

Fig. 1 is a schematic diagram of the principle of the method according to the present invention.

### Detailed description

In this specification, percentage values, unless specifically indicated otherwise, are based on weight (w/w). If any numerical ranges are provided, the ranges include also the upper and lower values. The open term "comprise" also includes a closed term "consisting of" as one option.

The term "intrinsic self-healing" or "intrinsically self-healing" or the like as used herein refers to the build-in, inherent self-healing ability of a material. Usually the reversible chemical bonds are involved within the material.

The term "autonomous self-healing" or "autonomously self-healing" or the like as used herein refers to the ability to initiate the self-healing process without external intervention. External intervention may be a temperature change to higher than the room temperature (e.g. 30 °C or more) and/or other stimuli such as pressure, chemicals, humidity, moisture, etc. External intervention may also be a force to be applied to initiate self-healing, e.g. when aligning cut/fractured surfaces, regardless of temperature. Thus, an autonomous self-healing material can heal without intervention at any given room temperature, e.g. 0-30 °C.

The term "universal self-healing" or the like as used herein refers to the self-healing ability in not only ambient conditions, but also various other conditions, such as at frozen temperatures down to -140 °C, under water, and etc.

The term "interpenetrating network" or "interpenetrating polymer network" or the like as used herein refers to materials comprising two or more networks which are at least partially interlaced on a polymer scale but not covalently bonded to each other. The network cannot be separated unless chemical bonds are broken. Simply mixing/blending two or more polymers does not create an interpenetrating polymer network. The term "interpenetrating PBS-PDMS" thus refers to PBS-PDMS having a interpenetrating network structure, rather than a blend of PBS and PDMS.

There are several desired properties for intrinsically self-healing materials. For example, how much/fast they stretch; how well and how quickly they recover after tension; how quickly, efficiently, and under what conditions they self-heal; how ambient conditions and changes thereof affect the self-healing ability, e.g. temperature, humidity, and etc.; transparency of materials at the wavelength of visible light at the non-stretched state; their other mechanical properties (stiffness, toughness, etc.); are, among other things, important aspects of properties.

However, known intrinsically self-healing materials in the prior art are able to achieve only some of the above-mentioned properties, while other properties are compromised. For example, many tough self-healing materials are often not transparent nor able to heal in universal conditions. Also, with many elastic materials that are capable of recovering from large strains, transparency is poor and healing in universal conditions is not possible. In addition, many intrinsically self-healing materials do not withstand moisture, for example, because water molecules can penetrate their bonds; also, the strength of said materials decreases as the amount of absorbed water molecules increases. It can also lead to significant swelling (weight and dimensions change noticeably) and inability to heal in aqueous medium or in presence of moisture as the water molecules prevent wetting and diffusion of dynamic bonds. Furthermore, known universal self-healing materials in the prior art have very poor mechanical robustness, for example they have low strength at break, low toughness, and/or even low elastic moduli, and/or sufficient elastic moduli only on a severely limited elongation range and poor shape recovery.

Most importantly, in the prior art, there are no materials capable to be stretched in considerable amounts, e.g. more than 15 times of original length, and fully return to their original shape and size when the stress is removed.

The stress-strain behavior of the intrinsically self-healing elastomer according to the present invention differs significantly from other similar materials. There is linear relationship between stress and strain in some embodiments according to the present invention, with a certain strain rate, and to certain extent / limit. These embodiments are in most cases a pristine elastomers, i.e. undamaged elastomers. There is significant strain hardening (increase of stress) on large deformation that can be seen even with some of the pristine elastomers with slow rate. The strain hardening becomes more evident as rate increases and with "aged" elastomers. The linear stress-strain curve and strain hardening differs from most of the elastomers. In this case, the linearity may only be result of using correction factor (assumption of isotropic and incompressible material) when calculating a true stress with pristine elastomers. The strain hardening has been recently shown on some highly stretchable self-healing materials, but these do not heal in various ambient conditions or universal conditions. Typically, without strain hardening the stress becomes constant after large elongation or it may even start to decrease leading to poor strength at break. This unique stress-strain behavior is due to the special structure and composition of the self-healing elastomer according to the present invention, which differs substantially from other intrinsically self-healing materials.

With reference to Fig. 1, the self-healing elastomer 100 according to the present invention can be made according to a novel method, which comprises
- preparing, with respect to the total weight of the self-healing elastomer 100,
   - 0.1 - 5 wt.% of boron trioxide (B₂O₃), preferably in the form of nanoparticles,
   - 65 - 90 wt.% of hydroxyl-terminated polydimethylsiloxane (PDMS-OH)
   - 5 - 30 wt.%, when measured in combined, of polysiloxane precursors 201, being
      o a first composition 201a comprising a siloxane base, preferably a polymer containing at least one ethylenically unsaturated group , and preferably also a branched siloxane-based polymer, and optionally a surface modifier which preferably contains at least one ethylenically unsaturated group;
      o a second composition 201b comprising a siloxane crosslinker,
         wherein the ratio by weight of the first composition 201a and the second composition 201b is 1:1 to 50:1;
- reacting B₂O₃ and PDMS-OH at an elevated temperature ranging from 60 °C to 200 °C, endpoints inclusive, thereby obtaining a first mixture 101,
- mixing the first mixture 101 with an alcohol, and then the first composition 201a, thereby obtaining a second mixture 102,
- reacting the second mixture 102 and the second composition 201b, thereby obtaining the self-healing elastomer 100.

The self-healing elastomer comprises an interpenetrating polymer network, comprising a polyborosiloxane-based polymer, and a polydimethylsiloxane-based polymer. Preferably, the self-healing elastomer may further comprise B₂O₃ nanoparticles.

In the method, the intermediate product, i.e. the first mixture 101, produced by reacting B₂O₃ and PDMS-OH is a novel supramolecular polymer having surprisingly large amount of dynamic bonds, or dipole-dipole interactions, that contribute to the intrinsic self-healing ability. Thus, the present invention provides the precursor for the self-healing elastomer. Preferably, the intermediate product/precursor is based on a polyborosiloxane-based polymer obtainable by reacting B₂O₃ nanoparticles with PDMS-OH. A nanoparticle, as defined herein, refers to a particle of matter that is between 1 and 500 nanometers (nm) in diameter, which can be observed by using, for example, a transmission electron microscope. In the present invention, the average diameter of B₂O₃ nanoparticles is preferably 50 - 200 nm, more preferably between 80 - 100 nm. B₂O₃ nanoparticles provide a large contacting area for the reaction and thus contribute to the reaction efficiency significantly, when compared with non- nanoparticles of B₂O₃. Thus, in the case of using B₂O₃ nanoparticles, less B₂O₃ is need. It is found that the amount of B₂O₃ used affects the mechanical properties in the product. For example, by using 1% of B₂O₃ in the method, the product is more elastic than, for example, using 5% of B₂O₃., while other factors are kept constant. Thus, by adjusting the amount of a variety of products having different mechanical properties according to the practical applications can be achieved. Thus, preferably, the B₂O₃ is in an amount of 0.40 - 3.00 wt.%, more preferably 0.65 - 1.90 wt.%, and even more preferably 0.75 - 1.45 wt.%, for example 0.85 wt.%. However, increasing amount of B₂O₃ (from 0.85 wt.%) can be beneficial to a certain extent in the multiphase elastomer as the number of cross-links can be increased, because there is residue left in the final product 100.

The length of the polymer chain of PDMS-OH used affects the properties, for example the viscosity, of the thus produced intermediate product and the final product, i.e. self-healing elastomer. Thus, the viscosity of the material can be controlled to allow a variety of applications.

The PDMS-OH has a kinematic viscosity ranging from 850 - 25000 cSt, more preferably 18000-22000 cSt, at 25 °C. A devise, such as Haake Mars 40, complying measurement standard ASTM D2196-20, may be used for determining the kinematic viscosity. It is found that using PDMS-OH having a lower kinematic viscosity, such as 850-1150 cSt, results a softer final elastomer regardless of the other processing conditions. Also, the brittleness of PBS increases as the viscosity of PDMS-OH decreases and/or amount of B₂O₃ increases. By increasing the kinematic viscosity of PDMS-OH used, the elastomer may become increasingly more robust. Regardless of the processing conditions or composition, the polymer strength and extensibility should increase with viscosity of PDMS-OH. The effective amount of net/junctions points (or "cross-links") actually increase as the length of the polymer chains increases as strands occupy "larger" three-dimensional space in a state of the highest conformational entropy (that is without stress). When stress increases there should be even more significant strain-hardening when the effective amount of "cross-links" increases (thus mechanical strength increases).

The amount of PDMS-OH used in the present method affects the self-healing ability of the final product, i.e. the self-healing elastomer. In order to achieve sufficient self-healing ability while maintain good mechanical properties of the self-healing elastomer, the amount of PDMS-OH used in the present method can be 65 - 90 wt.% of the final product. Preferably, the PDMS-OH used is in an amount of 69-89.5 wt.%, for example 69.3 - 89.1 wt.%, preferably 75 - 88 wt.%, more preferably 77 - 86 wt.%, for example 84 wt.% of the final product, i.e. self-healing elastomer.

The intermediate product, PBS, produced by reacting B₂O₃ and PDMS-OH, i.e. the first mixture 101, contains supramolecular dynamic bonds, such as hydrogen bonds and dative bonds between boron and the oxygen in the Si-O groups. Dynamic bonds allow self-healing ability to be maintained without deterioration over time. The intrinsic ability of the supramolecular polymer to repair mechanical damage repeatedly is generally based on the continuous ability of dynamic bonds to regenerate between polymer chains when damaged.

The intermediate product/precursor, i.e. the first mixture 101, according to the present invention has a relatively low glass transition temperature (Tg), e.g. significantly lower than -20 °C, which also contributes to the intrinsically self-healing ability of the material. A low glass transition temperature (Tg), e.g. lower than -20 °C, such as lower than -50 °C, or even lower than -140 °C, allows good mobility of the polymer chains at room temperature as well as cooler environment. Thus, the intermediate product/precursor 101 and the final product/self-healing elastomer 100 according to the present invention are able to heal not only in room temperature but also even in sub-zero conditions.

The reaction temperature for B₂O₃ and PDMS-OH affects how quickly and strongly the nanoparticles react with the hydroxyl group (OH). Thus the temperature can be adjusted according to the actual needs. An elevated temperature is needed for the hydroxyl group of PDMS-OH to leave and the subsequent reaction to happen. Generally, a reaction temperature of at least 60 °C is sufficient. On the other hand, although B₂O₃ and PDMS-OH may react at a higher temperature up to e.g. 200 °C, the reaction temperature is preferably not more than 150 °C, more preferably not more than 120 °C. It is observed that at a temperature of more than 150 °C, it is more challenging to form a film with a uniformed thickness, because air bubbles form in the material and cause a porous surface. The preferable temperature is thus in a range of 60 °C - 120 °C, for example 65 °C, 70 °C, 80 °C, 90 °C, 100 °C, 110 °C, or 115 °C, and most preferably 70 °C.

PBS is a non-Newtonian fluid, whose dynamic viscosity is affected by, among other things, the shear stress. PBS can behave like a solid elastic substance or like a viscous liquid. This depends on the rate of tension, e.g. uniaxial elongation rate. The material is therefore dimensionally unstable, in which case the material does not retain its shape at room temperature when in place. The method of the present invention utilizes a multiphase-strategy, where the idea is to take advantage of the soft and hard phases. In this case, the soft phase allows intrinsic self-healing (i.e., dynamic interactions), while the hard phase adds material rigidity and mechanical strength, as well as allows viscoelastic nature of material and material conversion to elastomer (due to entropy-driven elasticity). The first composition 201a and the second composition 201b according to the present invention contribute to the hard phase after curing.

The intermediate product/precursor according to the present invention can be softened and dissolved in an alcohol. The term alcohol refers to an organic compound that carries at least one hydroxyl functional group (-OH) bound to a saturated carbon atom. The amount of alcohol added can be at least 10 wt.%, for example up to 30 wt.% of the first mixture 101. By adjusting the amount of the alcohol, materials with various viscosities can be achieved. Thus, adding an alcohol in the method contributes a wide range of further potential applications of the material, especially for adhesive. The alcohol can be, for example, ethanol or isopropanol. Ethanol binds to the polymer chain more firmly than isopropanol and stays within the final product of self-healing elastomer. On the other hand, the alcohol also affects how fast the material cures. For instance, it is possible to keep mixing the solution as long as alcohol is added to the mixture. The existing amount of alcohol will eventually evaporate (and material becomes solid). The final product should be similar regardless of the amount of alcohol added during mixing. The viscosity of the material before cured thus can be tuned.

Optionally, the mixing step according to the present method can be combined with applying vacuum degassing, which is beneficial for achieving films with uniform quality without porosity.

According to the present method, the intermediate product/precursor is mixed with an alcohol and a first composition 201a comprising a siloxane base. The ingredients may be all mixed at the same time. Alternatively, the intermediate product/precursor can be mixed with an alcohol first, and then the first composition 201a is added. Mixing the first composition 201a in the mixture before adding the next ingredient, i.e. a second composition 201b comprising a siloxane crosslinker, ensures the homogenous mixture for facilitating the following reaction efficiency and a well-formed interpenetrating polymer network of the final product, i.e. the self-healing elastomer 100.

According to the present invention, the first composition 201a comprises a siloxane base. A siloxane base may also be referred as siloxane base resin, is a siloxane-based polymer containing vinyl groups, or in other words, a siloxane-based polymer containing at least one ethylenically unsaturated group. In some embodiments, the siloxane base is dimethylvinyl-terminated dimethylsiloxane. The first composition 201a can further comprise a surface modifier, for example dimethylvinylated and trimethylated silica. The first composition 201a can further comprise a branched siloxane, preferably containing at least one ethylenically unsaturated group, such as 1 1,1,5,5,5-hexamethyl-3,3-bis[(trimethylsily)oxy]- trisiloxane.

According to the present invention, the second composition 201b comprises a siloxane crosslinker. A crosslinker, or a crosslinking agent, is a molecule which has at least two reactive ends capable of chemically attaching to specific functional groups of the polymer chains. The siloxane crosslinker as disclosed herein is capable of connecting to the polymer chains of the siloxane base comprised in the first composition 201a to create a cross-linked polymer network. The second composition 201b serves as a curing agent for the reaction between the first composition 201a and the second composition 201 b. In some embodiments, the siloxane crosslinker is dimethyl, methylhydrogen siloxane. The second composition 201b can further comprise the same siloxane base as in the first composition 201a, for accelerating the crosslinking reaction. The second composition 201b can further comprise a surface modifier, for example dimethylvinylated and trimethylated silica. The second composition 201b can further comprise network formation agent, for example methylvinylcyclosiloxane.

Preferably, the reaction between the first composition 201a and the second composition 201b results in polydimethylsiloxane. Preferably, the resulting polydimethylsiloxane has a low glass transition temperature (Tg) equal to or below -55 °C, or equal to or below -125 °C, or equal to or below -140°C, to contribute in intrinsic healing and allow efficient healing to take place in cold environments.

The first composition 201a and the second composition 201b, i.e. polysiloxane precursors 201, contribute to the hard phase of the multi-phase strategy according to the invention. The combined amount of the compositions 201 thus affects the properties of the final product, i.e. self-healing elastomer 100. Thus, the amount can be adjusted according to the actual needs. The combined amount of the first composition 201a and the second composition 201b according to the present invention is advantageously in a range of 10 - 30 wt.% of the final product 100. It is observed that an amount increasing to close to 30wt.% affects the self-healing ability noticeably. An amount of more than 30 wt.% decreases significantly the self-healing ability of the final product 100 and thus is less desirable. On the other hand, an amount of less than 15 wt.%, especially less than 10 wt.%, affects noticeably the mechanical properties, such as Young's modulus, of the final product and thus is less desirable. When the amount of composition 201 is less than 15 wt.%, the elastic modulus, toughness and elasticity decreases, while the self-healing rate could increase. In this case it is possible to change the other processing conditions and or compositions (such as amount of B₂O₃) to restore the desired properties.

The weight ratio between the first composition 201a and the second composition 201b affects also the behavior and mechanical properties of the final product 100. In general, the weight ratio of the first composition 201a and the second composition 201b being in a range of 1:1 to 50:1 result in a final product 100 with good mechanical properties, while a range between 2.5:1 and 10:1 is more preferable. By increasing the proportion of the second composition 201b, the cross-linking structure of the material increases, leading to reduction of the elasticity/tensile strength and decrease of the hardness/Young's modulus. The elongation at break increases as ratio decreases, or as the amount of the second composition increases (201 b) (from 50:1 to 2.5:1), but other mechanical properties related to the elasticity, shape recovery, strength, stiffness, elastic modulus decrease when the ratio is close to 2.5:1 (in comparison to composition that has ratio more than 2.5:1; such as 5:1). Also, the polymer may lose it entropy-driven elasticity at large deformation as the number of net/junction points changes (i.e., the "effective" amount of "cross-links" becomes too high).

The reaction/curing time and the reaction temperature of the first composition 201a and the second composition 201b may vary. It is noted that the reaction can take place even at room temperature to a certain degree. However, it is found that curing in an elevated temperature, such as 60-150 °C, for a longer period of time, for example 4 hours (and then remainder of the time in a room temperature), contributes the improved elastic modulus and strength at break of the self-healing elastomer, as compared to curing in the same elevated temperature for a shorter period of time, for example 2 hours (and then remainder of the time in a room temperature). In some preferred embodiments the reaction takes place at 60-120 °C for about 10 hours. In general, curing time or reaction time should increase as the temperature decreases. For instance, it seems better to react the polymers in 70 °C for 24 hours than 12 hours. When a certain reaction time is achieved there seems to be no benefit nor disadvantage to continue the reaction at elevated temperature.

It is found that by decreasing the curing temperature (from 120 °C to 70 °C) and ratio of polymer base 201a to curing agent 201b (from 10:1 to 5:1) there is twofold increase for strength at break (δ_{break}) and elongation at break (ε_{break}) values.

As an example, the method of manufacturing a self-healing elastomer according to the present invention may comprise the following steps:
- mixing hydroxyl-group containing poly(dimethylsiloxane) (PDMS-OH, 18000-22000 cSt, 65 - 90 wt-% of the final product) with boron oxide nanoparticles (B₂O₃, 80 nm, 0.85 wt.% of the final product);
- stirring the mixture for more than one hour, for example, by using a magnetic stirrer at room temperature;
- optionally, applying a vacuum degassing for removing the excess air,
- the mixture can be e.g. applied to a non-stick surface, e.g. glass or a release film, and then heated to an elevated temperature, for example 60 °C - 120 °C;
- adding an alcohol (10 - 30 wt.% of the mixture from the previous step), such as ethanol or isopropanol, to the mixture,
- adding a siloxane base to the mixture,
- mixing the mixture by using magnetic stirring at room temperature, for example for 1 hour,
- adding a siloxane crosslinker to the mixture, wherein the weight ratio of siloxane base and the siloxane crosslinker is 1:1 to 50:1, and the weight percentage of the siloxane base and the siloxane crosslinker combined is 5 - 30 wt.% of the final product,
- mixing the mixture for curing at a at an elevated temperature, e.g. 60-120 °C, for about 10 hours,
- optionally, keeping the mixture at the elevated temperatures and/or room temperature for another period of time for the excess alcohol to evaporate,
- obtaining the final product, i.e. the self-healing elastomer.

As discussed above, the amounts of the ingredients used in the method according to the present application affect the properties of the self-healing elastomer and can be adjusted according to the actual needs in different applications.

In some preferred embodiments, the following ingredients are used in the method:
- 0.85 wt.% of boron trioxide (B₂O₃) nanoparticles with average diameter of 80 nm,
- 84.15 wt.% of hydroxyl-terminated polydimethylsiloxane (PDMS-OH) with kinematic viscosity of 18,000-22,000 cSt at 25 °C,
- 15.00 wt.%, when measured in combined, of polysiloxane precursors, being
   o a first composition comprising a siloxane base, and
   o a second composition comprising a siloxane crosslinker,
wherein the ratio by weight of the first composition and the second composition is 5:1;
and the curing temperature for the polysiloxane is 70 °C.

In said preferred embodiments, the resulting self-healing elastomer can be aged that leads to a state where it can be actuated and recovered to shape increasingly fast.

In some embodiments, the amount of the ingredients are used in the method as follows:
the ratio by weight of the B₂O₃ and PDMS-OH is 0.1:99.9 to 5:95;
the ratio by weight of the of the first mixture (101) and the alcohol is 70:30 to 90:10;
the ratio by weight of the polysiloxane precursors (201) and the first mixture (101) is 5:95 to 30:70, wherein the first composition (201a) comprises a siloxane base, and the second composition (201b) comprises a siloxane crosslinker, and the ratio by weight of the first composition (201a) and the second composition (201b) is 1:1 to 50:1.

In other words, according to some embodiments of the invention, the method for manufacturing a self-healing elastomer (100), comprises
- reacting boron trioxide (B₂O₃) and hydroxyl-terminated polydimethylsiloxane (PDMS-OH) at an elevated temperature ranging from 60 °C to 200 °C, endpoints inclusive, thereby obtaining a first mixture (101),
- mixing the first mixture (101) with an alcohol, and then a first composition (201a) of a siloxane precursors (201), thereby obtaining a second mixture (102),
- reacting the second mixture (102) and the second composition (201b) of the siloxane precursors (201),thereby obtaining the self-healing elastomer (100),
wherein
the ratio by weight of the B₂O₃ and PDMS-OH is 0.1:99.9 to 5:95;
the ratio by weight of the of the first mixture (101) and the alcohol is 70:30 to 90:10;
the ratio by weight of the polysiloxane precursors (201) and the first mixture (101) is 5:95 to 30:70, wherein the first composition (201a) comprises a siloxane base, and the second composition (201b) comprises a siloxane crosslinker, and the ratio by weight of the first composition (201a) and the second composition (201b) is 1:1 to 50:1.

### EXAMPLES

### Example 1 - method of manufacturing interpenetrating PBS-PDMS

In this section, the novel interpenetrating PBS-PDMS according to the present invention is simply denoted as PBS-PDMS.

**Materials.** Hydroxyl terminated poly(dimethylsiloxane) (PDMS-OH) with kinematic viscosities of 850-1,150 cSt and 18,000-22,000 cStwere purchased from Sigma-Aldrich. Boron oxide nanoparticles (B₂O₃, 80 nm) was purchased from SkySpring Nanomaterials Inc. Sylgard 184 was purchased from Sil-mid Limited. All materials were used as received.

### Synthesis of self-healing elastomer.

Different elastomer compositions, as shown in Table 1, were prepared by varying the viscosity of hydroxyl terminated poly(dimethylsiloxane)(PDMS-OH), weight percent (wt.%) of Sylgard 184, ratio of polymer base to curing agent (A:B), curing temperature (°c), and wt.% of boron oxide nanoparticles (B₂O₃ NPs).

0.84 - 2.12 wt.% of B₂O₃ nanoparticles were mixed with mortal to 69.3 - 89.1 wt.% of PDMS-OH with viscosities of 850-1150 and/or 18,000-22 000 cSt. The mixture was heated at an elevated temperature between 60 °C - 120 °C. Alcohol was added to the mixture which was then stirred well. Sylgard 184 polymer base (∼13-28 wt.%) was added to the mixture which was then stirred well and optionally with vacuum degassing. Sylgard 184 curing agent (∼1.3-6.0 wt.%) was added to the solution while still continuously mixing the solution. The solution was dropped casted onto petri dish or onto a glass substrate with release film. The cross-linking of the poly(boronsiloxane)-poly(dimethylsiloxane) elastomers (denoted as PBS-PDMS) were carried out at elevated temperatures of 70-150 °C. After peeling the elastomer from the release film, the samples were cooled in room temperature for at least 24 hours before any measurements were taken.

**Table 1 | PBS-PDMS elastomer compositions.**

| **Composition name** | **Viscosity of PDMS-OH** | **Amount of Sylgard 184 (wt.%)** | **Ratio of polymer base to curing agent** (A:B) | **Curing temperature** | **Amount of B₂O₃ NPs** |
|---|---|---|---|---|---|
| | **(cSt)** | | | **(°C)** | **(wt.%)** |
| PBS-PDMS-1^{†} | 850-1150 | 15.0 | 10:1 | 120 | 0.85 |
| PBS-PDMS-2^{‡} | 850-1150/18,000-22,000 | 15.0 | 10:1 | 120 | 0.85 |
| PBS-PDMS-3^{§} | 18,000-22,000 | 15.0 | 10:1 | 120 | 0.85 |
| PBS-PDMS-4^{§} | 18,000-22,000 | 20.0 | 10:1 | 120 | 0.85 |
| PBS-PDMS-5^{§} | 18,000-22,000 | 25.0 | 10:1 | 120 | 0.85 |
| PBS-PDMS-6^{§} | 18,000-22,000 | 15.0 | 10:1 | 70 | 0.85 |
| PBS-PDMS-7^{§} | 18,000-22,000 | 15.0 | 5:1 | 70 | 0.85 |
| PBS-PDMS-8^{§} | 18,000-22,000 | 15.0 | 2.5:1 | 70 | 0.85 |
| PBS-PDMS-9^{§} | 18,000-22,000 | 15.0 | 5:1 | 120 | 0.85 |
| PBS-PDMS-10^{§} | 18,000-22,000 | 15.0 | 5:1 | 150 | 0.85 |
| PBS-PDMS-11^{§} | 18,000-22,000 | 15.0 | 5:1 | 70 | 1.49 |
| PBS-PDMS-12^{§} | 18,000-22,000 | 15.0 | 5:1 | 70 | 2.12 |
| t = PDMS-OH viscosity 850-1150 sCt (100 wt.%); ‡ = PDMS-OH with viscosities of 850-1150 cSt and 18,000-22,000 cSt mixed with ratio 1:1; § = PDMS-OH viscosity 18,000-22,000 cSt (100 wt.%); | | | | | |

## Claims

1. A method for manufacturing a self-healing elastomer (100), comprising
- preparing, with respect to the total weight of the self-healing elastomer (100),
• 0.1 - 5 wt.% of boron trioxide (B₂O₃),
• 65 - 90 wt.% of hydroxyl-terminated polydimethylsiloxane (PDMS-OH),
• 5 - 30 wt.%, when measured in combined, of polysiloxane precursors (201), being
o a first composition (201a) comprising a siloxane base, and
o a second composition (201b) comprising a siloxane crosslinker,
wherein the ratio by weight of the first composition (201a) and the second composition (201b) is 1:1 to 50:1;
- reacting B₂O₃ and PDMS-OH at an elevated temperature ranging from 60 °C to 200 °C, endpoints inclusive, thereby obtaining a first mixture (101),
- mixing the first mixture (101) with an alcohol, and then the first composition (201a), thereby obtaining a second mixture (102),
- reacting the second mixture (102) and the second composition (201b), thereby obtaining the self-healing elastomer (100).

2. The method according to claim 1, wherein the alcohol is at least 10 wt.% with respect to the weight of the first mixture.

3. The method according to claim 1 or 2, wherein the siloxane base is a siloxane-based polymer containing at least one ethylenically unsaturated group and the first composition further comprises a branched siloxane-based polymer, optionally a surface modifier which preferably contains at least one ethylenically unsaturated group.

4. The method according to any of claims 1 to 3, wherein reacting the second mixture (102) and the second composition (201b) is taken place at an elevated temperature ranging from 60 °C to 150 °C, endpoints inclusive.

5. The method according to any of claims 1 to 4, wherein the second composition (201b) further comprises the siloxane-based polymer containing at least one ethylenically unsaturated group.

6. The method according to any of claims 1 to 5, wherein the siloxane-based polymer containing at least one ethylenically unsaturated group is dimethylvinyl-terminated dimethylsiloxane; and/or wherein the siloxane crosslinker is dimethyl, methylhydrogen siloxane; and/or wherein the branched siloxane-based polymer is 1,1,1,5,5,5-hexamethyl-3,3-bis[(trimethylsily)oxy]-trisiloxane.

7. The method according to any of claims 1 to 6, wherein the B₂O₃ is in an amount of 0.40 - 3.00 wt.%, preferably 0.65 - 1.90 wt.%, more preferably 0.75 - 1.45 wt.%, for example 0.85 wt.%.

8. The method according to any of claims 1 to 7, wherein the PDMS-OH is in an amount of 69 - 89.5 wt.%, for example 69.3 - 89.1 wt.%, preferably 75 - 88 wt.%, more preferably 77 - 86 wt.%, for example 84 wt.%.

9. The method according to any of claims 1 to 8, wherein the polysiloxane precursors combined is in an amount of 10-20 wt.%, preferably 13 -17 wt.%, for example 15 wt.%, wherein the ratio by weight of the first composition (201a) and the second composition (201b) is 2.5:1 to 10:1.

10. The method according to any of claims 1 to 9, wherein the PDMS-OH has a kinematic viscosity ranging from 850 - 25000 cSt, more preferably 18000-22000 cSt, at 25 °C.

11. The method according to any of claims 1 to 10, wherein the B₂O₃ is in a form of nanoparticles having an average diameter of 50 - 200 nm, preferably 80- 100 nm.

12. The method according to any of claims 1 to 11, wherein the alcohol is ethanol or isopropanol.

13. The method according to any of claims 1 to 12, wherein, with respect to the total weight of the self-healing elastomer (100), the boron trioxide (B₂O₃) is 0.85 wt.% and has an average diameter of 80 nm, the PDMS-OH is 84.15 wt.% and has a kinematic viscosity of 18,000-22,000 cSt at 25 °C, the polysiloxane precursors (201) is 15.00 wt.%, wherein the ratio by weight of the first composition (201a) and the second composition (201b) is 5:1; and wherein reacting the second mixture (102) and the second composition (201b) is taken place at an 70 °C.

14. A siloxane-based precursor for a self-healing elastomer, comprising a polyborosiloxane-based polymer, obtainable by reacting B₂O₃ nanoparticles with hydroxyl-terminated polydimethylsiloxane (PDMS-OH);
preferably, the self-healing elastomer further comprises B₂O₃ nanoparticles.

15. A self-healing elastomer, comprising
- an interpenetrating polymer network, comprising
• a polyborosiloxane-based polymer, and
• a polydimethylsiloxane-based polymer,
preferably, the self-healing elastomer further comprises B₂O₃ nanoparticles; and/or preferably, the self-healing elastomer is obtained by the method according to any of claims 1-13.
